# EUROPEAN PATENT APPLICATION

(11) **EP 4 756 249 A1**
(43) Date of publication of application: **10.06.2026**
(21) Application number: 24848765.4
(22) Date of filing: 28.06.2024
(51) Int. Cl.: F16F 1/38, F16F 15/08

(54) **BUSHING, VIBRATION ISOLATION STRUCTURE, AND METHOD FOR MANUFACTURING VIBRATION ISOLATION STRUCTURE**

(30) Priority: 31.07.2023 JP 2023124963
(71) Applicant: Prospira Corporation, Kanagawa prefecture 212-0013 (JP)
(72) Inventor: OTSU, Kazutaka, Kawasaki city, Kanagawa 212-0013 (JP)
(74) Representative: V.O.
(86) International application number: PCT/JP2024/023591
(87) International publication number: WO 2025/028106

(57) **Abstract**

Provided are a bush, an anti-vibration structure, and a method for manufacturing the anti-vibration structure, with which it is possible to improve workability when joining a bush to a rod-like member. A bush 1 includes: a bracket 2 having an outer cylinder section 25; an inner cylinder section 3; and a main body rubber section 4 that connects the outer cylinder section and the inner cylinder section to each other. The inner cylinder section is composed of a thermoplastic resin.

## Description

### Technical Field

This invention relates to a bush, an anti-vibration structure, and a method for manufacturing the anti-vibration structure.

### Background Art

There has conventionally been an anti-vibration structure in which the inner circumference surface of a rubber elastic body in cylinder shape of a bush is joined to a rod-like member (a stabilizer bar and the like) by adhesion (for example, Patent Literature 1).

### Citation List

### Patent Literature

Patent Literature 1: Japanese Unexamined Patent Application Publication No. 2019-147408

### Summary of Invention

### Technical Problem

However, in the conventional technique, there has been room for improvement with respect to workability in joining the bush to the rod-like member (further, the manufacturability of the anti-vibration structure).

An object of this invention is to provide a bush, an anti-vibration structure, and a method for manufacturing the anti-vibration structure, which can improve workability in joining the bush to a rod-like member.

### Solution to Problem

[1] A bush that includes a bracket section having an outer cylinder section, an inner cylinder section, and a main body rubber section that couples the outer cylinder section and the inner cylinder section to each other, in which the inner cylinder section is configured of a thermoplastic resin.

With this, workability in joining the bush to a rod-like member can be improved.

[2] The bush according to [1], in which the bush includes a pair of division assembling bodies, and in which each of the respective division assembling bodies includes a division bracket member that configures a part of the bracket section and has a division outer cylinder section configuring a part in the circumferential direction of the outer cylinder section, a division inner cylinder member configuring a part in the circumferential direction of the inner cylinder section, and a division main body rubber member that configures a part in the circumferential direction of the main body rubber section and couples the division outer cylinder section of the division bracket member and the division inner cylinder member.

With this, workability in joining the bush to a rod-like member can be further improved.

[3] The bush according to [1], in which the inner cylinder section is welded to a rod-like member that extends on the inner circumference side of the inner cylinder section.

With this, workability in joining the bush to a rod-like member can be improved.

[4] An anti-vibration structure that includes the bush according to any one of [1] to [3], and a rod-like member that extends on the inner circumference side of the inner cylinder section of the bush, in which the inner cylinder section is welded to the rod-like member.

With this, workability in joining the bush to a rod-like member can be improved.

[5] The anti-vibration structure according to [4], in which the outer circumference surface of the rod-like member has a rough surface section having a plurality of concave portions, and in which the inner cylinder section is welded to the rough surface section of the rod-like member.

With this, the inner cylinder section and the rod-like member can be joined more reliably.

[6] An anti-vibration structure manufacturing method for manufacturing the anti-vibration structure according to [4] or [5] including a bush manufacturing step for manufacturing the bush, and a rod-like member joining step for joining the inner cylinder section to the rod-like member by welding in the state where the rod-like member is extended to the inner circumference side of the inner cylinder section of the bush.

With this, workability in joining the bush to a rod-like member can be improved.

[7] The anti-vibration structure manufacturing method according to [6], in which in the rod-like member joining step, the rod-like member is heated by electromagnetic induction heating in the state where coils are disposed on the outer circumference side of the rod-like member, so that the inner circumference surface of the inner cylinder section is melted to be welded to the rod-like member.

With this, workability in joining the bush to a rod-like member can be further improved.

### Advantageous Effects of Invention

According to this invention, it is possible to provide the bush, the anti-vibration structure, and the method for manufacturing the anti-vibration structure, which can improve the workability in joining the bush to the rod-like member.

### Brief Description of Drawings

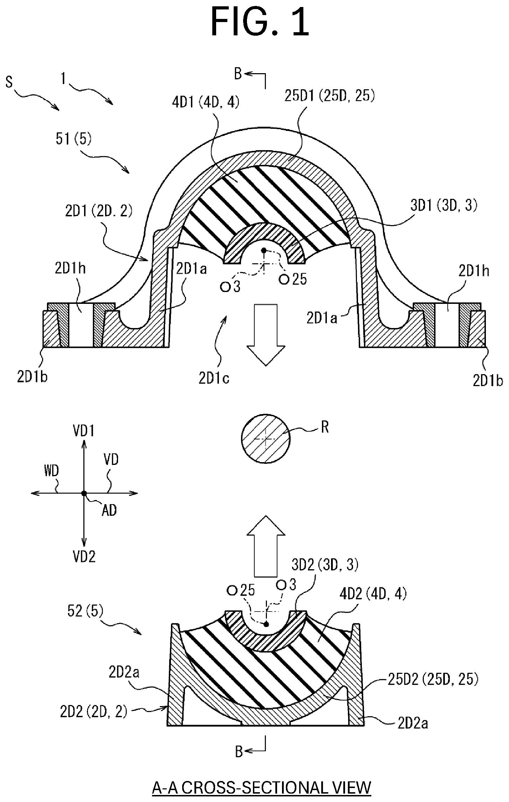

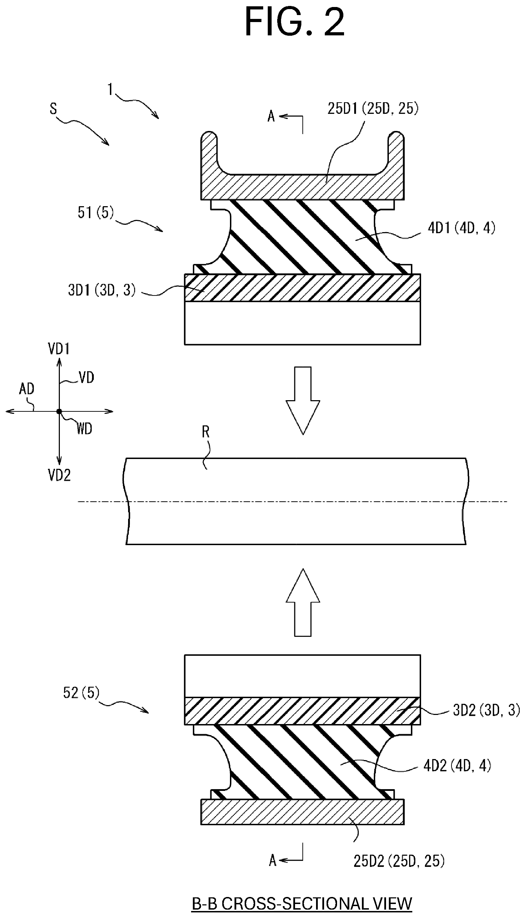

Fig. 1 is a schematic diagram for explaining a rod-like member disposing step in an anti-vibration structure manufacturing method according to a first embodiment of the present invention, and is an A-A cross-sectional view schematically illustrating, by a cross section taken along line A-A of Fig. 2 parallel to the direction perpendicular to the axial line direction, a bush and an anti-vibration structure according to the first embodiment of the present invention in the state before a rod-like member is disposed on the inner circumference side of the bush immediately before the rod-like member disposing step.
Fig. 2 is a schematic diagram for explaining the rod-like member disposing step in the anti-vibration structure manufacturing method according to the first embodiment of the present invention, and is a B-B cross-sectional view schematically illustrating, by a cross section taken along line B-B of Fig. 1 parallel to the axial line direction, the bush and the anti-vibration structure according to the first embodiment of the present invention in the state of Fig. 1.

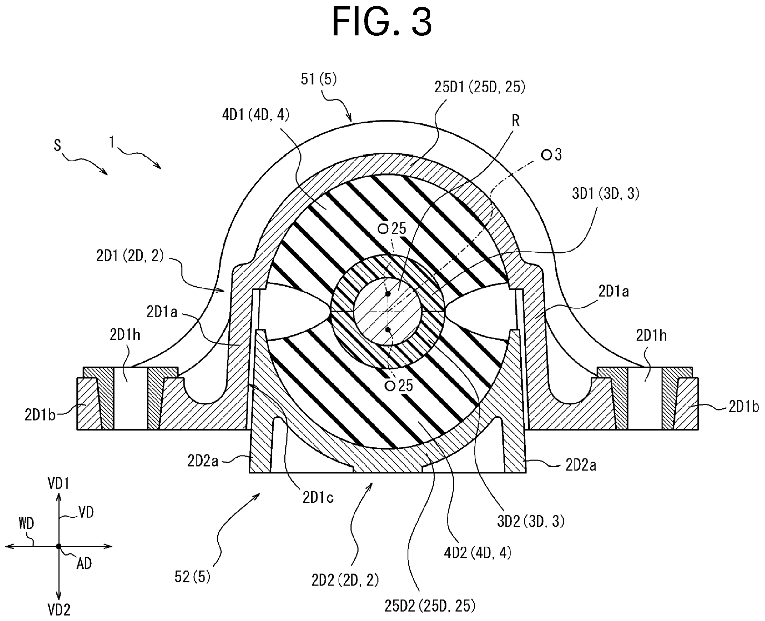

Fig. 3 is a schematic diagram for explaining the rod-like member disposing step in the anti-vibration structure manufacturing method according to the first embodiment of the present invention, and is a cross-sectional view in the direction perpendicular to the axial line direction schematically illustrating, by a cross section similar to Fig. 1, the bush and the anti-vibration structure according to the first embodiment of the present invention in the state where the rod-like member is disposed on the inner circumference side of the bush immediately after the rod-like member disposing step.

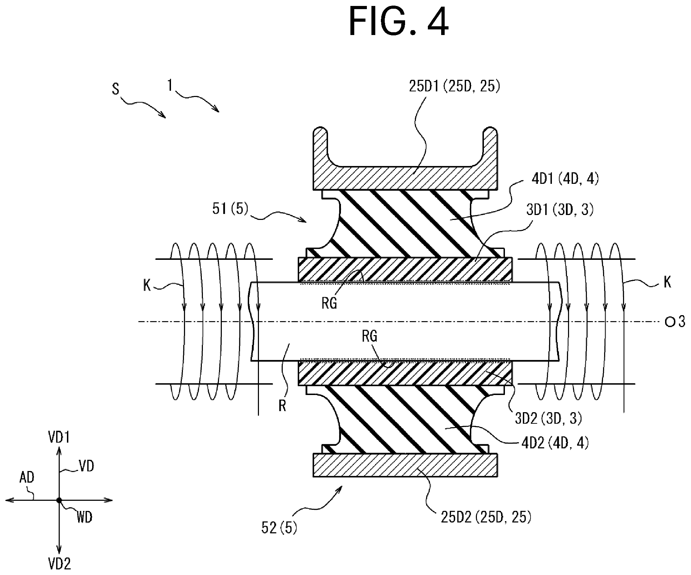

Fig. 4 is a schematic diagram for explaining an example of a rod-like member joining step in the anti-vibration structure manufacturing method according to the first embodiment of the present invention, and is a cross-sectional view in the axial line direction schematically illustrating, by a cross section similar to Fig. 2, the bush and the anti-vibration structure according to the first embodiment of the present invention during the rod-like member joining step.

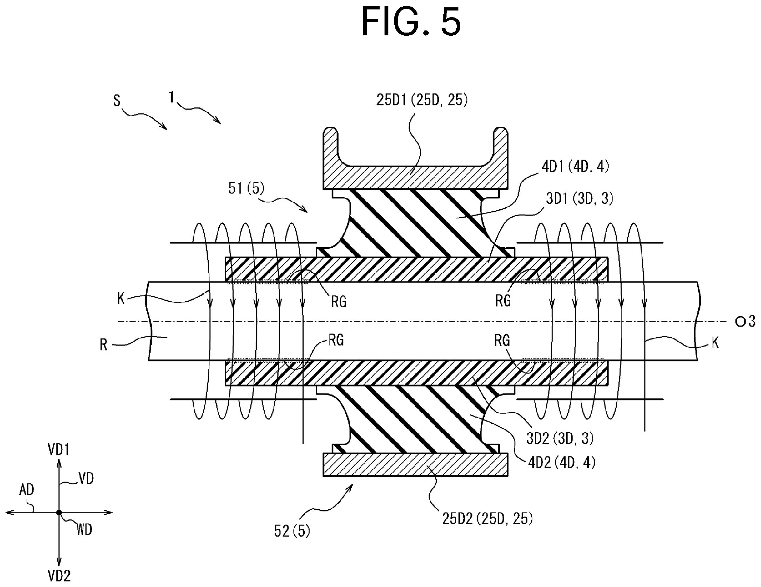

Fig. 5 is a schematic diagram for explaining another example of the rod-like member joining step in the anti-vibration structure manufacturing method according to the first embodiment of the present invention, and is a cross-sectional view in the axial line direction schematically illustrating, by a cross section similar to Fig. 2, the bush and the anti-vibration structure according to the first embodiment of the present invention during the rod-like member joining step.

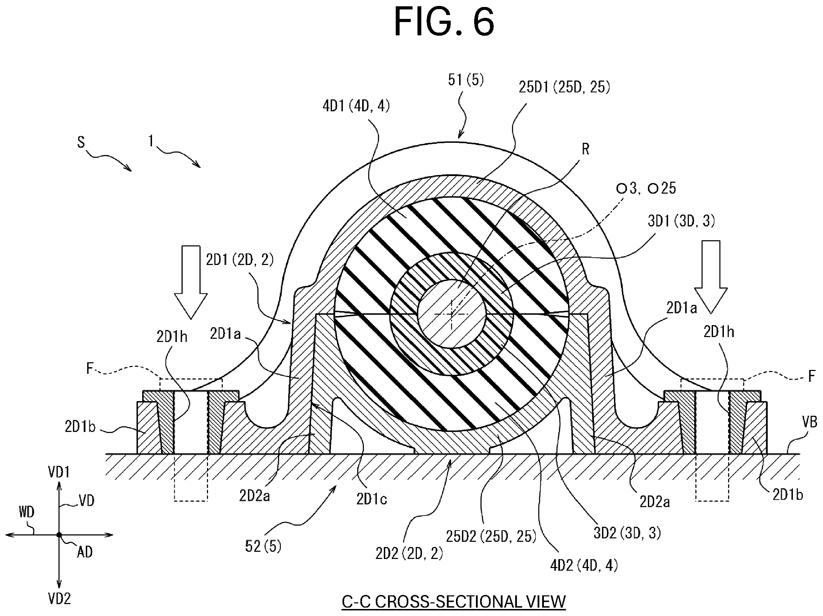

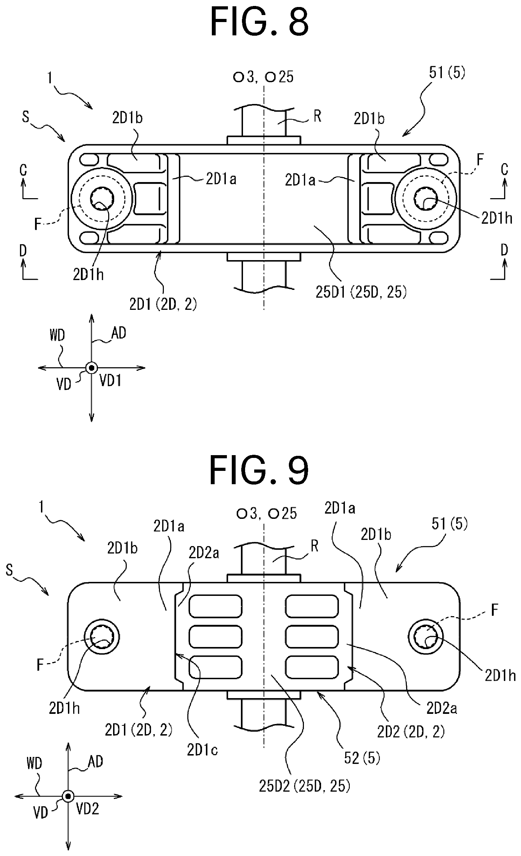

Fig. 6 is a schematic diagram for explaining a bracket section mounting step in the anti-vibration structure manufacturing method according to the first embodiment of the present invention, is a cross-sectional view in the direction perpendicular to the axial line direction schematically illustrating, by a cross section similar to Fig. 1, the bush and the anti-vibration structure according to the first embodiment of the present invention immediately after the bracket section mounting step, and is also a C-C cross-sectional view schematically illustrating, by a cross section taken along line C-C of Fig. 8 parallel to the direction perpendicular to the axial line direction.

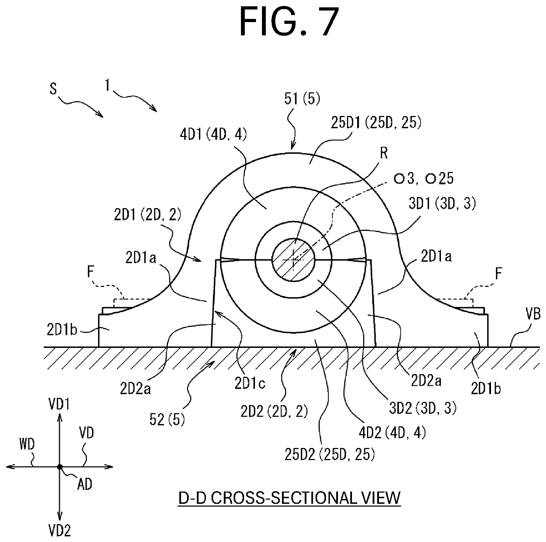

Fig. 7 is a D-D cross-sectional view schematically illustrating, by a cross section taken along line D-D of Fig. 8 parallel to the direction perpendicular to the axial line direction, the bush and the anti-vibration structure in the state of Fig. 6.
Fig. 8 is a top view schematically illustrating the state at the time of seeing the bush and the anti-vibration structure in the state of Fig. 6 in the direction from the vertical direction first side toward the vertical direction second side.
Fig. 9 is a bottom view schematically illustrating the state at the time of seeing the bush and the anti-vibration structure in the state of Fig. 6 in the direction from the vertical direction second side toward the vertical direction first side.

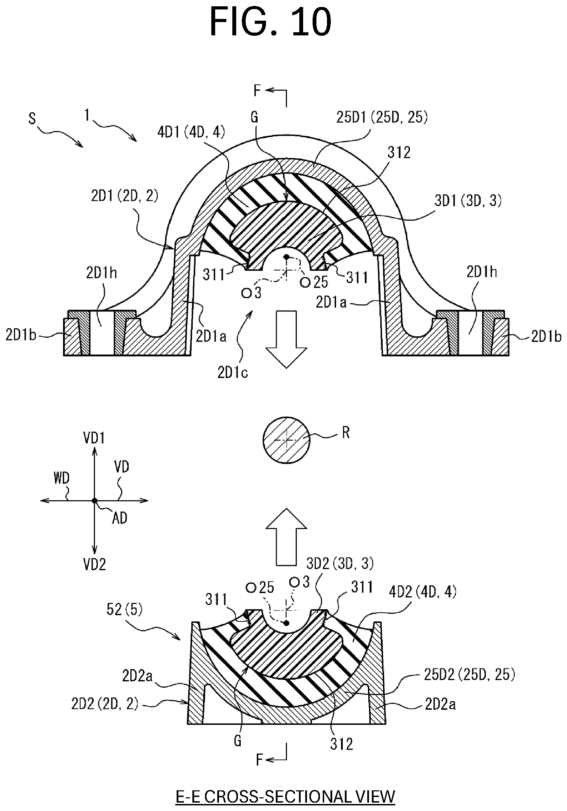

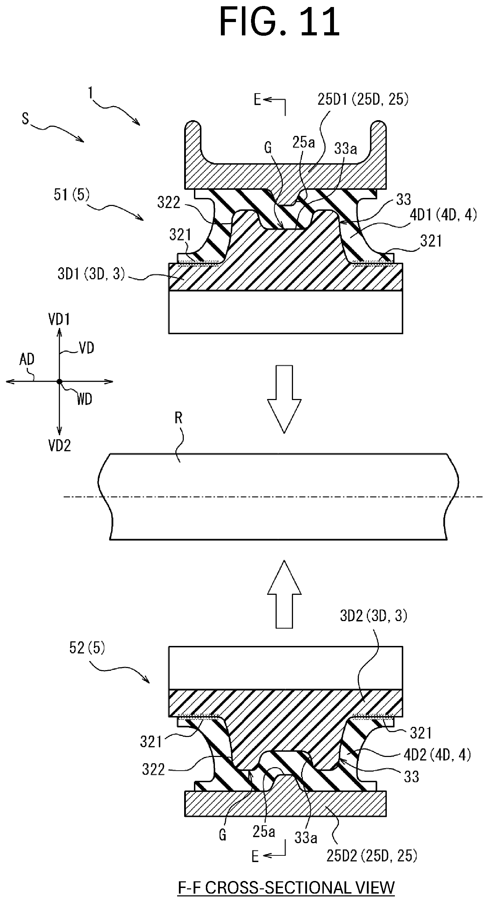

Fig. 10 is a schematic diagram for explaining a rod-like member disposing step in an anti-vibration structure manufacturing method according to a second embodiment of the present invention, and is an E-E cross-sectional view schematically illustrating, by a cross section taken along line E-E of Fig. 11 parallel to the direction perpendicular to the axial line direction, the bush and the anti-vibration structure according to the second embodiment of the present invention in the state before the rod-like member is disposed on the inner circumference side of the bush immediately before the rod-like member disposing step.
Fig. 11 is a schematic diagram for explaining the rod-like member disposing step in the anti-vibration structure manufacturing method according to the second embodiment of the present invention, and is an F-F cross-sectional view schematically illustrating, by a cross section taken along line F-F of Fig. 10 parallel to the axial line direction, the bush and the anti-vibration structure according to the second embodiment of the present invention in the state of Fig. 10.

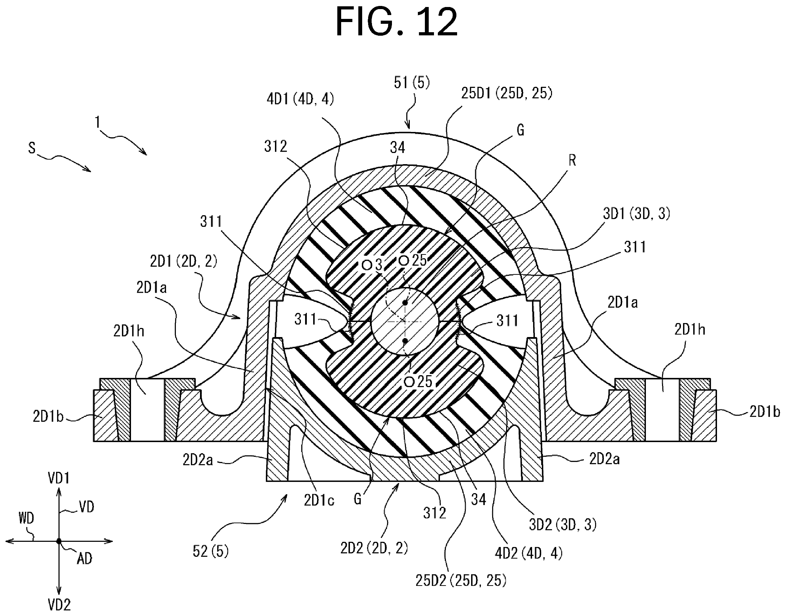

Fig. 12 is a schematic diagram for explaining the rod-like member disposing step in the anti-vibration structure manufacturing method according to the second embodiment of the present invention, and is a cross-sectional view in the direction perpendicular to the axial line direction schematically illustrating, by a cross section similar to Fig. 10, the bush and the anti-vibration structure according to the second embodiment of the present invention in the state where the rod-like member is disposed on the inner circumference side of the bush immediately after the rod-like member disposing step.

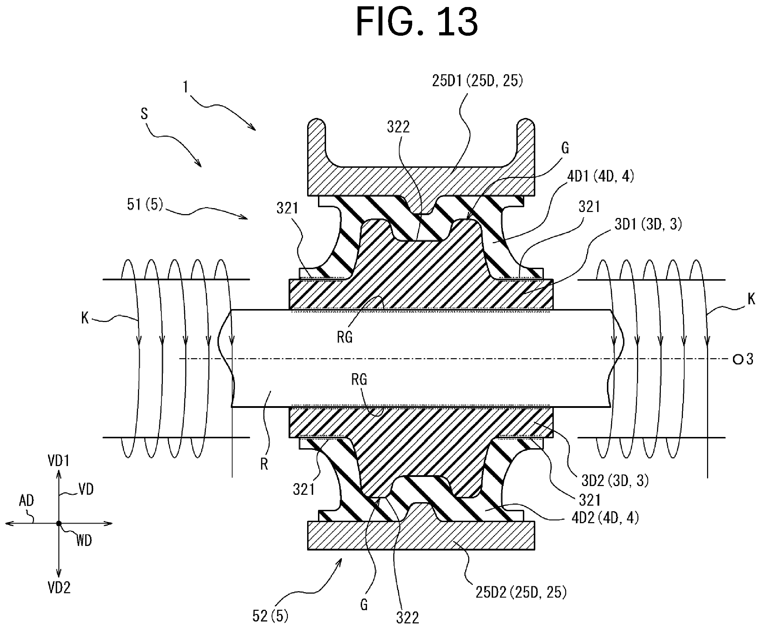

Fig. 13 is a schematic diagram for explaining an example of a rod-like member joining step in the anti-vibration structure manufacturing method according to the second embodiment of the present invention, and is a cross-sectional view in the axial line direction schematically illustrating, by a cross section similar to Fig. 11, the anti-vibration structure according to the second embodiment of the present invention during the rod-like member joining step.

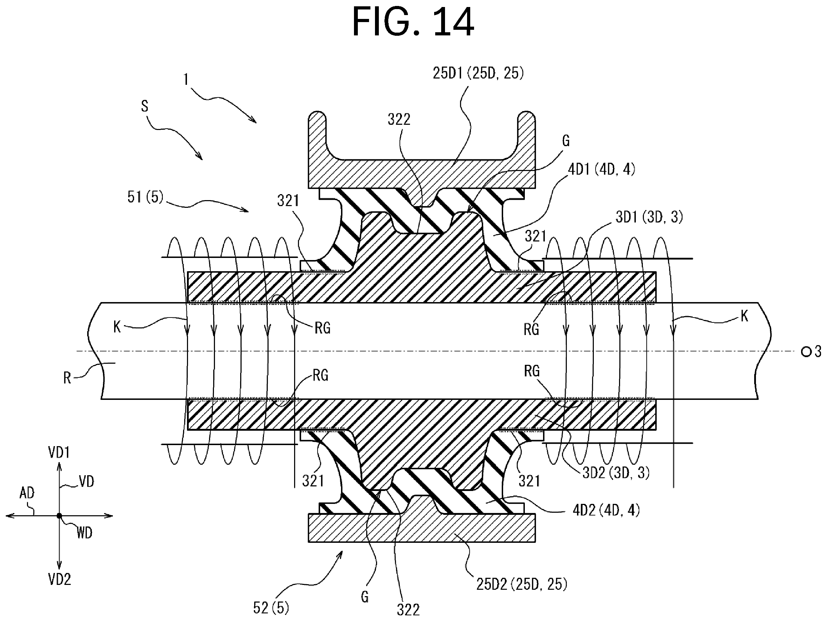

Fig. 14 is a schematic diagram for explaining another example of the rod-like member joining step in the anti-vibration structure manufacturing method according to the second embodiment of the present invention, and is a cross-sectional view in the axial line direction schematically illustrating, by a cross section similar to Fig. 11, the bush and the anti-vibration structure according to the second embodiment of the present invention during the rod-like member joining step.

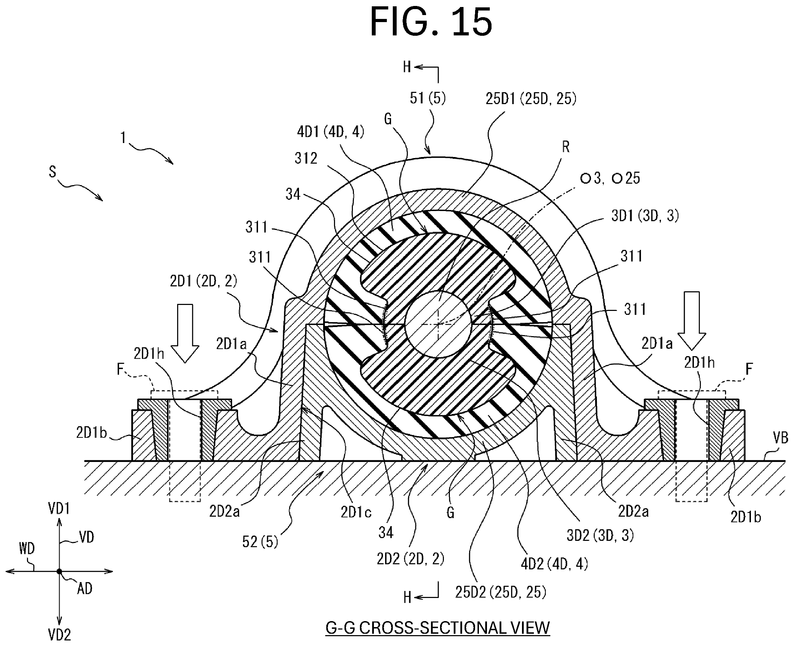

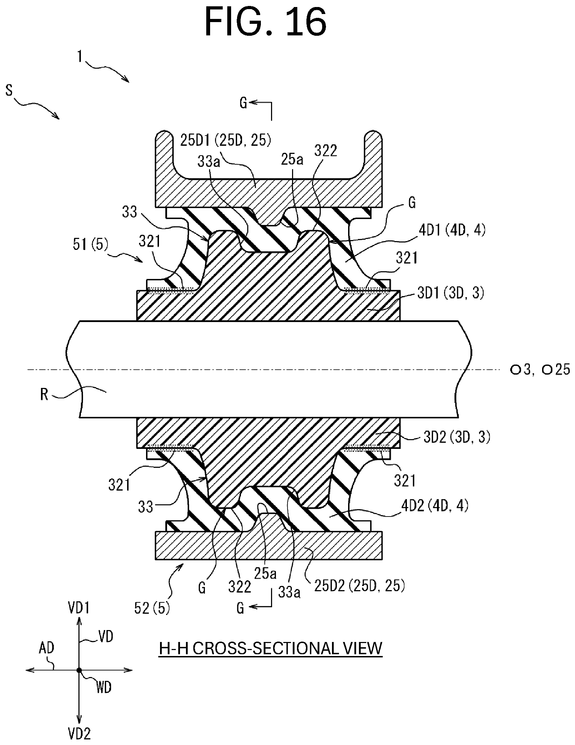

Fig. 15 is a schematic diagram for explaining a bracket section mounting step in the anti-vibration structure manufacturing method according to the second embodiment of the present invention, is a cross-sectional view in the direction perpendicular to the axial line direction schematically illustrating, by a cross section similar to Fig. 10, the bush and the anti-vibration structure according to the second embodiment of the present invention immediately after the bracket section mounting step, and is also a G-G cross-sectional view schematically illustrating, by a cross section taken along line G-G of Fig. 16 parallel to the direction perpendicular to the axial line direction, the bush and the anti-vibration structure according to the second embodiment of the present invention immediately after the bracket section mounting step.
Fig. 16 is an H-H cross-sectional view schematically illustrating, by a cross section taken along line H-H of Fig. 15 parallel to the axial line direction, the bush and the anti-vibration structure in the state of Fig. 15.

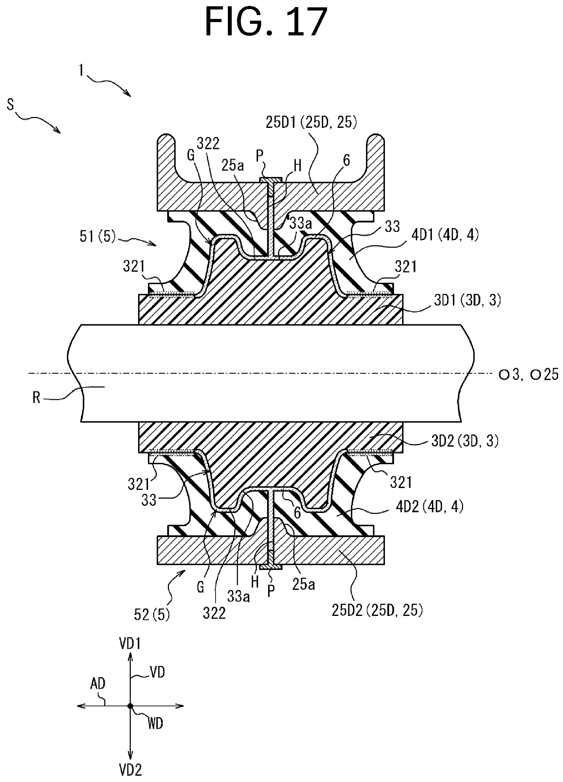

Fig. 17 is a cross-sectional view in the axial line direction schematically illustrating, by a cross section in the axial line direction similar to Fig. 16, a modification example of the bush and the anti-vibration structure according to the second embodiment of the present invention.

### Description of Embodiments

A bush, an anti-vibration structure, and an anti-vibration structure manufacturing method according to the present invention are preferably used for the coupling portion between a rod-like member of a vehicle (for example, the torsion bar, in particular, the stabilizer bar, of the vehicle) and a vibration reception member (for example, a part of a vehicle body).

Hereinbelow, embodiments of the bush, the anti-vibration structure, and the anti-vibration structure manufacturing method according to this invention will be exemplified and described with reference to the drawings.

Figs. 1 to 9 are drawings for explaining the bush, the anti-vibration structure, and the anti-vibration structure manufacturing method according to a first embodiment of the present invention and modification examples thereof. The anti-vibration structure manufacturing method according to the first embodiment of the present invention is used for manufacturing an anti-vibration structure S according to the first embodiment of the present invention as illustrated in Figs. 6 to 9. The anti-vibration structure S according to the first embodiment of the present invention includes a bush 1 according to the first embodiment of the present invention, and a rod-like member R.
Figs. 10 to 17 are drawings for explaining the bush, the anti-vibration structure, and the anti-vibration structure manufacturing method according to a second embodiment of the present invention and modification examples thereof. The anti-vibration structure manufacturing method according to the second embodiment of the present invention is used for manufacturing the anti-vibration structure S according to the second embodiment of the present invention as illustrated in the examples of Figs. 15 and 16 and the modification example of Fig. 17. The anti-vibration structure S according to the second embodiment of the present invention includes the bush 1 according to the second embodiment of the present invention, and the rod-like member R. The anti-vibration structure manufacturing method according to the second embodiment of the present invention described with reference to Figs. 10 to 17 is basically similar to the anti-vibration structure manufacturing method according to the first embodiment of the present invention described with reference to Figs. 1 to 9, and is only different in the configurations of the bush 1 and the anti-vibration structure S manufactured.

Hereinbelow, for the sake of description convenience, the first and the second embodiments will be described in parallel.

Unless otherwise specified, the matters described below are matters that are respectively applicable to the respective examples (the respective embodiments and the modification examples thereof) described in the present specification.

In the present specification, in describing the bush 1 and the anti-vibration structure S, for convenience, unless otherwise specified, as illustrated in each drawing, a configuration in which no input is added to the bush 1 and the anti-vibration structure S, and the bush 1 and the anti-vibration structure S are in the stationary and normal state will be described.

First, the basic configurations of the bush 1 and the anti-vibration structure S according to the first and the second embodiments will be described.

As illustrated in Figs. 6 to 9, Figs. 15 to 17, and the like, the bush 1 includes a bracket section 2 having an outer cylinder section 25, an inner cylinder section 3, and a main body rubber section 4. The main body rubber section 4 couples the outer cylinder section 25 and the inner cylinder section 3 to each other.

The bush 1 includes a pair of division assembling bodies 5.

Each of the respective division assembling bodies 5 includes a division bracket member 2D, a division inner cylinder member 3D, and a division main body rubber member 4D.

The division bracket member 2D configures a part of the bracket section 2. The division bracket member 2D has a division outer cylinder section 25D that configures a part in the circumferential direction of the outer cylinder section 25.

The division inner cylinder member 3D configures a part in the circumferential direction of the inner cylinder section 3. The division inner cylinder member 3D is positioned on the inner circumference side of the division outer cylinder section 25D.

The division main body rubber member 4D configures a part in the circumferential direction of the main body rubber section 4. The division main body rubber member 4D is positioned between the division outer cylinder section 25D of the division bracket member 2D and the division inner cylinder member 3D in the radial direction, and couples the division outer cylinder section 25D and the division inner cylinder member 3D.

In this way, the bush 1 is divided into two of the pair of division assembling bodies 5.

In the present specification, one of the pair of division assembling bodies 5 is referred to as a "first division assembling body 51", and the other of the pair of division assembling bodies 5 is referred to as a "second division assembling body 52". In addition, the division bracket member 2D, the division outer cylinder section 25D, the division inner cylinder member 3D, and the division main body rubber member 4D of the first division assembling body 51 are referred to as a first division bracket member 2D1, a first division outer cylinder section 25D1, a first division inner cylinder member 3D1, and a first division main body rubber member 4D1, respectively. In addition, the division bracket member 2D, the division outer cylinder section 25D, the division inner cylinder member 3D, and the division main body rubber member 4D of the second division assembling body 52 are referred to as a second division bracket member 2D2, a second division outer cylinder section 25D2, a second division inner cylinder member 3D2, and a second division main body rubber member 4D2, respectively.

The bracket section 2 is configured of a pair of division bracket members 2D (the first division bracket member 2D1 and the second division bracket member 2D2).

The outer cylinder section 25 of the bracket section 2 is configured of a pair of division outer cylinder sections 25D (the first division outer cylinder section 25D1 and the second division outer cylinder section 25D2).

The inner cylinder section 3 is configured of a pair of division inner cylinder members 3D (the first division inner cylinder member 3D1 and the second division inner cylinder member 3D2).

The main body rubber section 4 is configured of a pair of division main body rubber members 4D (the first division main body rubber member 4D1 and the second division main body rubber member 4D2).

As illustrated in Figs. 1 and 2 and Figs. 10 and 11, in each of the respective division assembling bodies 5, the division bracket member 2D, the division inner cylinder member 3D, and the division main body rubber member 4D are coupled to each other, and thereby are integrally configured. The pair of division assembling bodies 5 are isolated from each other in the state before being joined to the rod-like member R, and are configured to be able to be assembled to each other (Figs. 3, 6, 12, and 15).

In the state where the pair of division assembling bodies 5 are isolated from each other (Figs. 1, and 10), center axial lines 025 of the respective division outer cylinder sections 25D are in the state of being isolated from each other, and center axial lines 03 of the respective division inner cylinder members 3D are in the state of being isolated from each other. Here, the center axial line 025 of the division outer cylinder section 25D corresponds to the center axial line of the imaginary cylinder shape in which the division outer cylinder section 25D is extended over the entire circumference. In addition, the center axial line 03 of the division inner cylinder member 3D corresponds to the center axial line of the imaginary cylinder shape in which the division inner cylinder member 3D is extended over the entire circumference.

In the state where the pair of division assembling bodies 5 are contacted with each other to be assembled (hereinafter, also referred to as a "contact assembling state") (Figs. 6 and 15), the respective division outer cylinder sections 25D come into contact with each other to cause the outer cylinder section 25 to form a cylinder shape, the respective division inner cylinder members 3D come into contact with each other to cause the inner cylinder section 3 to form a cylinder shape, and the respective division main body rubber members 4D come into contact with each other to cause the main body rubber section 4 to form a cylinder shape. At this time, the center axial lines 025 of the respective division outer cylinder sections 25D coincide with each other to form the center axial line 025 of one outer cylinder section 25, and the center axial lines 03 of the respective division inner cylinder members 3D coincide with each other to form the center axial line 03 of one inner cylinder section 3.

In addition, at this time, the inner cylinder section 3 is positioned on the inner circumference side of the outer cylinder section 25. In addition, in this state, the inner cylinder section 3 is disposed coaxially with the outer cylinder section 25, in other words, the center axial line 03 of the inner cylinder section 3 coincides with the center axial line 025 of the outer cylinder section 25.

In the present specification, the center axial line 03 of the inner cylinder section 3 or the division inner cylinder member 3D is assumed to be the center axial line 03 of each of the bush 1 and the anti-vibration structure S. In addition, in the present specification, unless otherwise specified, the direction parallel to the center axial line 03 of each of the bush 1 and the anti-vibration structure S is referred to as the "axial line direction (AD)", the side far from the center of each of the bush 1 and the anti-vibration structure S in the axial line direction (AD) is referred to as the "axial line direction outer side", the side close to the center of each of the bush 1 and the anti-vibration structure S in the axial line direction (AD) is referred to as the "axial line direction inner side", the direction perpendicular to the center axial line O3 of each of the bush 1 and the anti-vibration structure S is referred to as the "direction perpendicular to the axial line direction", the side close to the center axial line 03 of each of the bush 1 and the anti-vibration structure S is referred to as the "inner circumference side", the side far from the center axial line 03 of each of the bush 1 and the anti-vibration structure S is referred to as the "outer circumference side", the circumferential direction about the center axial line 03 of each of the bush 1 and the anti-vibration structure S is referred to as the "circumferential direction", and the radial direction about the center axial line 03 of each of the bush 1 and the anti-vibration structure S is referred to as the "radial direction".

In addition, in the present specification, for convenience, one direction perpendicular to the axial line direction (AD) is referred to as the "vertical direction (VD)", one side in the vertical direction (VD) is referred to as the "vertical direction first side (VD1)", and the other side in the vertical direction (VD) is referred to as the "vertical direction second side (VD2)". In addition, the direction perpendicular to the axial line direction (AD) and the vertical direction (VD) is referred to as the "width direction (WD)", the side close to the center of each of the bush 1 and the anti-vibration structure S in the width direction (WD) is referred to as the "width direction inner side", and the side far from the center of each of the bush 1 and the anti-vibration structure S in the width direction (WD) is referred to as the "width direction outer side". In the respective drawings, these respective directions are indicated by arrows.

For example, the bush 1 and the anti-vibration structure S can be oriented during use such that the axial line direction AD is a substantially horizontal direction, the vertical direction VD is a substantially vertical direction, and the vertical direction first side VD1 is an upper side in the substantially vertical direction. However, the bush 1 and the anti-vibration structure S may be oriented during use such that the axial line direction AD is oriented to any direction.

In the example of each drawing, the outer cylinder section 25 is configured to form a substantially cylindrical shape in the contact assembling state of the pair of division assembling bodies 5 (Figs. 6 and 15), but may be configured to form any cylinder shape in the contact assembling state of the pair of division assembling bodies 5.

In the first embodiment (Fig. 6), the inner cylinder section is configured to form a substantially cylindrical shape in the contact assembling state of the pair of division assembling bodies 5, and in the second embodiment (Fig. 15), the inner cylinder section is configured to form a cylinder shape such that its inner circumference surface has a circular cross-sectional shape and its outer circumference surface has a non-circular cross-sectional shape, but the inner cylinder section may be configured to form any cylinder shape in the contact assembling state of the pair of division assembling bodies 5.

In the example of each drawing, each division outer cylinder section 25D configures the substantially semi-circumference of the outer cylinder section 25, each division inner cylinder member 3D configures the substantially semi-circumference of the inner cylinder section 3, and each division main body rubber member 4D configures the substantially semi-circumference of the main body rubber section 4, and further, each of each division outer cylinder section 25D, each division inner cylinder member 3D, and each division main body rubber member 4D forms a substantially semi-cylinder shape. However, the first division outer cylinder section 25D1 may configure the portion corresponding to any angle range of the outer cylinder section 25, the first division inner cylinder member 3D1 may configure the portion corresponding to any angle range of the inner cylinder section 3, and the first division main body rubber member 4D1 may configure the portion corresponding to any angle range of the main body rubber section 4, and in that case, the second division outer cylinder section 25D2 configures the portion corresponding to the remaining angle range of the outer cylinder section 25, the second division inner cylinder member 3D2 configures the portion corresponding to the remaining angle range of the inner cylinder section 3, and the second division main body rubber member 4D2 configures the portion corresponding to the remaining angle range of the main body rubber section 4. It should be noted that preferably, the angle range (in the example of each drawing, approximately 180°) in which the first division outer cylinder section 25D1 extends, the angle range (in the example of each drawing, approximately 180°) in which the first division inner cylinder member 3D1 extends, and the angle range (in the example of each drawing, approximately 180°) in which the first division main body rubber member 4D1 extends are substantially the same, and in addition, the angle range (in the example of each drawing, approximately 180°) in which the second division outer cylinder section 25D2 extends, the angle range (in the example of each drawing, approximately 180°) in which the second division inner cylinder member 3D2 extends, and the angle range (in the example of each drawing, approximately 180°) in which the second division main body rubber member 4D2 extends are substantially the same.

In the example of each drawing, the first division outer cylinder section 25D1 is positioned on the vertical direction first side VD1 with respect to the second division outer cylinder section 25D2, the first division inner cylinder member 3D1 is positioned on the vertical direction first side VD1 with respect to the second division inner cylinder member 3D2, and the first division main body rubber member 4D1 is positioned on the vertical direction first side VD1 with respect to the second division main body rubber member 4D2 (Figs. 1 and 10). At the time of seeing the cross section in the direction perpendicular to the axial line direction (Figs. 1 and 10), each of the first division outer cylinder section 25D1, the first division inner cylinder member 3D1, and the first division main body rubber member 4D1 forms a shape curved convexly to the vertical direction first side VD1, and each of the second division outer cylinder section 25D2, the second division inner cylinder member 3D2, and the second division main body rubber member 4D2 forms a shape curved convexly to the vertical direction second side VD2.

The main body rubber section 4 is configured of a rubber.

In each division assembling body 5, a part or all of the outer circumference surface of the division main body rubber member 4D is joined to the inner circumference surface of the division outer cylinder section 25D. In addition, in each division assembling body 5, a part or all of the inner circumference surface of the division main body rubber member 4D is joined to the outer circumference surface of the division inner cylinder member 3D.

The joining between the main body rubber section 4 and the outer cylinder section 25 (further, between the division main body rubber member 4D and the division outer cylinder section 25D) and the joining between the main body rubber section 4 and the inner cylinder section 3 (further, between the division main body rubber member 4D and the division inner cylinder member 3D) may be performed by any method, such as for example, vulcanization adhesion and/or adhesion via an adhesive.

The inner cylinder section 3 is configured to be joined (adhered) to the rod-like member R in the state where the rod-like member R is extended to the inner circumference side of the inner cylinder section 3 (that is, into the center hole of the inner cylinder section 3) (Figs. 3 to 6, and Figs. 12 to 15).

In the example of each drawing, the inner cylinder section 3 is configured of a thermoplastic resin (Figs. 3 to 6, and Figs. 12 to 15). With this, the inner cylinder section 3 is configured to be joined to the rod-like member R by welding (thermal welding).

As the thermoplastic resin configuring the inner cylinder section 3, for example, nylon is given.

The bracket section 2 is configured of, for example, a metal and/or a resin. The pair of division bracket members 2D may be equal to each other in material, and may be different from each other in material.

In the example of each drawing, the bracket section 2 further has, in addition to the outer cylinder section 25, fitting sections 2D1a and 2D2a, and a mounting section 2D1b (Figs. 1 and 10).

In the example of each drawing, the fitting sections 2D1a and 2D2a of the bracket section 2 are configured so as to be able to assemble, by fitting, the pair of division bracket members 2D of the bracket section 2 (further, the pair of division assembling bodies 5) (Figs. 1, 6, 10, and 15).

The fitting sections 2D1a and 2D2a are configured of a pair of leg sections 2D1a of the first division bracket member 2D1, and a pair of leg sections 2D2a of the second division bracket member 2D2. The pair of leg sections 2D1a of the first division bracket member 2D1 extend from the end portions on both sides in the circumferential direction of the first division outer cylinder section 25D1 of the first division bracket member 2D1 to the vertical direction second side VD2. The pair of leg sections 2D2a of the second division bracket member 2D2 extend from the end portions on both sides in the circumferential direction of the second division outer cylinder section 25D2 of the second division bracket member 2D2 to the vertical direction second side VD2. The pair of leg sections 2D2a of the second division bracket member 2D2 are positioned on the width direction WD inner side with respect to the pair of leg sections 2D1a of the first division bracket member 2D1.

The first division assembling body 51 sections an accommodation concave section 2D1c configured to be able to accommodate the second division assembling body 52. The accommodation concave section 2D1c is opened on the vertical direction second side VD2. In the example of each drawing, the accommodation concave section 2D1c is sectioned by the surfaces on the width direction WD inner sides of the pair of leg sections 2D1a of the first division bracket member 2D1, and the surface on the vertical direction second side VD2 of each of the first division outer cylinder section 25D1, the first division inner cylinder member 3D1, and the first division main body rubber member 4D1. The second division assembling body 52 is configured such that when the second division assembling body 52 is accommodated in the accommodation concave section 2D1c of the first division assembling body 51, the second division assembling body 52 relatively moves to the vertical direction first side VD1 in the accommodation concave section 2D1c, and when the pair of leg sections 2D2a of the second division bracket member 2D2 reach the back side of the accommodation concave section 2D1c, the pair of leg sections 2D2a of the second division bracket member 2D2 are fit with the pair of leg sections 2D1a of the first division bracket member 2D1 (Figs. 3, 6, 12, and 15).

In the state where the pair of leg sections 2D2a of the second division bracket member 2D2 are fitted with the pair of leg sections 2D1a of the first division bracket member 2D1, and further, the second division assembling body 52 is completely accommodated in the accommodation concave section 2D1c of the first division assembling body 51 (Figs. 6 and 15), the pair of division assembling bodies 5 are brought into the state of being contacted with each other to be assembled (the contact assembling state of the pair of division assembling bodies 5). At this time, the end surfaces on the vertical direction second side VD2 of the respective division assembling bodies 5 are made to be flush with each other.

The mounting section 2D1b of the bracket section 2 is configured so as to be mounted to a vibration reception member (for example, a part of the vehicle body) VB (Figs. 6 and 15). The vibration reception member VB forms, for example, a substantially planar shape.

More specifically, in the example of each drawing, the first division bracket member 2D1 of the bracket section 2 has a pair of mounting sections 2D1b on both sides in the width direction WD. The pair of mounting sections 2D1b extend from the end portions on the vertical direction second side VD2 of the pair of leg sections 2D1a of the first division bracket member 2D1 to the width direction WD outer side. Each mounting section 2D1b has a fastening hole 2D1h, and is configured to be mounted via the fastening hole 2D1h to the vibration reception member VB by a fastening tool F such as a bolt by fastening and the like.

As illustrated in Figs. 6 and 15, the bush 1 is configured such that the rod-like member R is extended to the inner circumference side of the inner cylinder section 3, the pair of division assembling bodies 5 are contacted with each other to be assembled (the contact assembling state of the pair of division assembling bodies 5), and the bush 1 is mounted via the mounting section 2D1b of the bracket section 2 to the vibration reception member VB by fastening and the like in the state where the end surface on the vertical direction second side VD2 of each division assembling body 5 (more specifically, in the example of each drawing, the end surface on the vertical direction second side VD2 of each of each mounting section 2D1b, each leg section 2D1a, each leg section 2D2a, and the second division outer cylinder section 25D2) is placed on the vibration reception member VB. In this way, the bush 1 is configured to absorb the rotation displacement in the torsion direction of the rod-like member R by the action of the main body rubber section 4 and suppress the transmission of the vibration between the rod-like member R and the vibration reception member VB, in the state where the bush 1 is coupled between the rod-like member R and the vibration reception member VB.

The anti-vibration structure S (Figs. 6 and 15) includes the bush 1, and the rod-like member R that extends on the inner circumference side of the inner cylinder section 3 of the bush 1. The rod-like member R is, for example, the torsion bar, in particular, the stabilizer bar, of the vehicle.

In the anti-vibration structure S, the inner cylinder section 3 is joined to the rod-like member R. More specifically, in the anti-vibration structure S, the inner cylinder section 3 is welded to the rod-like member R.

The anti-vibration structure S may further include the vibration reception member (for example, a part of the vehicle body) VB.

Next, the anti-vibration structure manufacturing method according to the first and the second embodiments will be described. The anti-vibration structure manufacturing method includes a bush manufacturing step, a rod-like member disposing step, a rod-like member joining step, and a bracket section mounting step.

First, in the bush manufacturing step, the bush 1 is manufactured (Figs. 1 and 2, and Figs. 10 and 11).

More specifically, in the first and the second embodiments, the bush 1 obtained in the bush manufacturing step is in the state where the pair of division assembling bodies 5 are isolated from each other. In the bush manufacturing step, each of the respective division assembling bodies 5 is manufactured through a vulcanization step. More specifically, for example, for each division assembling body 5, in an ejection step, in the state where the division backet member 2D and the division inner cylinder member 3D that are previously made are set into a die, an unvulcanized rubber for configuring the division main body rubber member 4D is ejected into the cavity of the die, and thereafter, in the vulcanization step, the unvulcanized rubber is vulcanization molded, so that the division bracket member 2D and the division inner cylinder member 3D are coupled to each other by the division main body rubber member 4D, thereby obtaining the division assembling body 5.

After the bush manufacturing step, in the rod-like member disposing step, the rod-like member R is disposed such that the rod-like member R extends to the inner circumference side of the inner cylinder section 3 (that is, into the center hole of the inner cylinder section 3) of the bush 1 (Figs. 3 and 12).

More specifically, in the first and the second embodiments, as illustrated in each of Figs. 3 and 12, the pair of division assembling bodies 5 are assembled to each other such that the rod-like member R is sandwiched between the pair of division inner cylinder members 3D. In this case, the second division assembling body 52 is inserted into the accommodation concave section 2D1c of the first division assembling body 51 until the pair of division inner cylinder members 3D come into contact with each other. Here, the second division assembling body 52 is not necessarily required to be inserted into the accommodation concave section 2D1c of the first division assembling body 51 until the second division assembling body 52 is completely accommodated into the accommodation concave section 2D1c of the first division assembling body 51.

Immediately after the rod-like member disposing step, the rod-like member R is in the state of being extended to the inner circumference side of the inner cylinder section 3 of the bush 1. At this time, the inner circumference surface of the inner cylinder section 3 of the bush 1 is preferably contacted with the outer circumference surface of the rod-like member R.

After the rod-like member disposing step, in the rod-like member joining step, in the state where the rod-like member R is extended to the inner circumference side of the inner cylinder section 3 of the bush 1, the inner cylinder section 3 is joined to the rod-like member R (Figs. 4, 5, 13, and 14). With this, the inner cylinder section 3 is brought into the state of being joined to the rod-like member R that extends on the inner circumference side of the inner cylinder section 3.

More specifically, in the first and the second embodiments, in the rod-like member joining step, the inner cylinder section 3 is joined to the rod-like member R by welding. With this, the inner cylinder section 3 is brought into the state of being welded to the rod-like member R that extends on the inner circumference side of the inner cylinder section 3.

As a specific welding method, for example, given is a method in which the rod-like member R is heated, and thereby, the inner circumference surface of the inner cylinder section 3 is melted to be welded to the rod-like member R. During this, preferably, a load is applied to the second division bracket member 2D2 toward the vertical direction first side VD1, and thereby, the inner cylinder section 3 is brought into contact with the rod-like member R.

As a method for heating the rod-like member R, for example, as illustrated in each of Figs. 4, 5, 13, and 14, given is a method in which in the state where coils K are disposed on the outer circumference side of the rod-like member R, an electric current is flowed to the coils K, and the rod-like member R is heated by electromagnetic induction heating.

In disposing the coils K on the outer circumference side of the rod-like member R, as illustrated in each of Figs. 4 and 13, the coils K may be each disposed on the outer circumference side of the portion of the rod-like member R positioned on the axial line direction AD outer side with respect to the inner cylinder section 3 of the bush 1. With this, the heat generated in the rod-like member R on the inner circumference sides of the coils K is transmitted through the rod-like member R to reach up to the inner cylinder section 3, and can melt the inner circumference surface of the inner cylinder section 3. Such the disposition of the coils K is preferable for the case where the length in the axial line direction AD of the inner cylinder section 3 is relatively short.

Alternatively, when the coils K are disposed on the outer circumference side of the rod-like member R, as illustrated in each of Figs. 5 and 14, the coils K may be respectively disposed on the outer circumference sides of the end portions on both sides in the axial line direction AD of the inner cylinder section 3 of the bush. With this, the inner circumference surface of the inner cylinder section 3 can be melted by the heat generated in the rod-like member R on the inner circumference sides of the coils K. Such the disposition of the coils K is preferable for the case where the length in the axial line direction AD of the inner cylinder section 3 is relatively long. It should be noted that in this case, like the respective examples of Figs. 5 and 14, preferably, the inner cylinder section 3 extends to the axial line direction outer side with respect to the main body rubber section 4, and the coils K are each disposed only on the outer circumference side of the portion of the inner cylinder section 3 positioned on the axial line direction outer side with respect to the main body rubber section 4.

After the rod-like member joining step, in the bracket section mounting step, the bracket section 2 is mounted via the mounting section 2D1b of the bracket section 2 to the vibration reception member (for example, a part of the vehicle body) VB by fastening and the like (Figs. 6 and 15).

More specifically, in the first and the second embodiments, in the bracket section mounting step, the second division bracket member 2D2 (further, the second division assembling body 52) is pushed toward the vertical direction first side VD1 to the back side of the accommodation concave section 2D1c until the pair of division assembling bodies 5 are brought into the contact assembling state, and further, the mounting section 2D1b of the bracket section 2 is mounted to the vibration reception member VB by fastening and the like in the state where the end surface on the vertical direction second side VD2 of each division assembling body 5 (more specifically, in the example of each drawing, the end surface on the vertical direction second side VD2 of each of each mounting section 2D1b, each leg section 2D1a, each leg section 2D2a, and the second division outer cylinder section 25D2) is placed on the vibration reception member VB.

As above, the anti-vibration structure S can be obtained.

As described above, in the first and the second embodiments, the inner cylinder section 3 of the bush 1 is configured of the thermoplastic resin. With this, the inner cylinder section 3 of the bush 1 can be joined to the rod-like member R by welding.

In addition, as described above, in the first and the second embodiments, in the anti-vibration structure manufacturing method and the anti-vibration structure S, the inner cylinder section 3 is joined to the rod-like member R by welding.

With this, the inner cylinder section 3 and the rod-like member R can be joined (further, adhered) without being required to interpose the adhesive between the inner cylinder section 3 and the rod-like member R, and further, the adhesion step is not required.

In this way, by joining the inner circumference surface of the bush 1 to the rod-like member R by welding, for example, as compared with the case where the inner circumference surface of the bush 1 is joined to the rod-like member R by adhesion, the operation simplification, the time shortening, the facility simplification, and the like are enabled for the joining operation to the rod-like member R, and further, the workability in joining the bush 1 to the rod-like member R (further, the manufacturability of the anti-vibration structure S) can be improved. It should be noted that when the joining is performed by the adhesion, the number of steps is increased to be expensive in manufacturing, and in addition, a long time is required for drying the adhesive.

In addition, by joining the inner cylinder section 3 to the rod-like member R, the sealing is provided between the inner cylinder section 3 and the rod-like member R, and as a result, mud water, dust, and the like can be prevented from intruding between the inner cylinder section 3 and the rod-like member R. If the mud water, dust, and the like intrude between the inner cylinder section 3 and the rod-like member R, abnormal noise due to stick slip is caused, and wear is caused there to cause a gap, so that rattling abnormal noise can be caused.

In addition, by joining the inner cylinder section 3 to the rod-like member R, the bush 1 can be prevented from being slid with respect to the rod-like member R. For example, in the case where the bush 1 is coupled between the torsion bar as the rod-like member R and the vehicle body as the vibration reception member VB, if the bush 1 can be slid with respect to the rod-like member R, the torsion bar R is slid to the horizontal direction with respect to the vehicle body VB at the time of applying a force in the horizontal direction, and can interfere with other parts.

In addition, as described above, in the first and the second embodiments, the bush 1 is divided into two of the pair of division assembling bodies 5, and each of the respective division assembling bodies 5 includes the division bracket member 2D having the division outer cylinder section 25D, the division inner cylinder member 3D, and the division main body rubber member 4D. By such the configuration, in the rod-like member disposing step, simply by assembling the pair of division assembling bodies 5 to each other so as to sandwich the rod-like member R between the pair of division inner cylinder members 3D, the rod-like member R can be easily disposed on the inner circumference side of the inner cylinder section 3 of the bush 1. With this, the workability in joining the bush 1 to the rod-like member R (further, the manufacturability of the anti-vibration structure S) can be improved.

However, the bush 1 may not be divided into two of the pair of division assembling bodies 5, and the entire bush 1 may be integrally configured.

It should be noted that when as described above, in the rod-like member joining step, the rod-like member R is heated by the electromagnetic induction heating in the state where the coils K are disposed on the outer circumference side of the rod-like member R, so that the inner circumference surface of the inner cylinder section 3 is melted to be welded to the rod-like member R (Figs. 4 and 5, and Figs. 13 to 14), in particular, the operation simplification, the time shortening, the facility simplification, and the like are easily enabled, and further, the workability in joining the bush 1 to the rod-like member R (further, the manufacturability of the anti-vibration structure S) can be further improved.

However, in the rod-like member joining step, by a method different from this, the inner cylinder section 3 may be joined to the rod-like member R by welding.

In the respective examples described in the present specification, the anti-vibration structure manufacturing method may further perform a rod-like member processing step at any timing before the rod-like member disposing step.

In the rod-like member processing step, at least a part of the portion of the outer circumference surface of the rod-like member R, which is to come into contact with the inner cylinder section 3 is subjected to a surface processing process by a laser and the like, thereby forming a rough surface section RG having a plurality of minute concave portions (indicated by dot hatching in Figs. 4 and 5, and Figs. 13 and 14). With this, the outer circumference surface of the rod-like member R has the rough surface section RG having the plurality of concave portions. The surface roughness of the rough surface section RG is rough as compared with other portions on the outer circumference surface of the rod-like member R. By the presence of the rough surface section RG, in the rod-like member joining step thereafter, the melted resin of the inner cylinder section 3 enters into the plurality of concave portions of the rough surface section RG, and is cooled thereafter to be able to be cured, and by the anchor effect, the inner cylinder section 3 and the rod-like member R can be joined more reliably. That is, in this case, the inner cylinder section 3 is easily welded to, in particular, the rough surface section RG of the outer circumference surface of the rod-like member R.

As the surface processing process described above, for example, one described in Patent No. 6489908 may be adopted.

However, the rod-like member processing step (further, the rough surface section RG) is not essential.

In the respective examples described in the present specification, in the contact assembling state of the pair of division assembling bodies 5 (Figs. 6 and 15), the main body rubber section 4 may be in the state of being compressed. In this case, since initial distortion is applied to the main body rubber section 4, the durability can be improved.

It should be noted that in the example of each drawing, in the state where the pair of division assembling bodies 5 are isolated from each other (Figs. 1 and 10), in each division assembling body 5, the center axial line 03 of the division inner cylinder member 3D and the center axial line 025 of the division outer cylinder section 25D are positioned at positions different from each other in the vertical direction VD, and with this, when the pair of division assembling bodies 5 are brought into the contact assembling state (Figs. 6 and 15), and the center axial line 03 of the division inner cylinder member 3D and the center axial line 025 of the division outer cylinder section 25D coincide with each other, the main body rubber section 4 is compressed.

However, this configuration is not essential.

In the respective examples described in the present specification, like the first embodiment illustrated in Figs. 1 to 9, in each division assembling body 5, in the entire length in the axial line direction AD of the division inner cylinder member 3D, at the time of seeing the cross section in the direction perpendicular to the axial line direction, the outer circumference surface of the division inner cylinder member 3D may be joined to the division main body rubber member 4D over substantially the entire length in the circumferential direction thereof (Fig. 1).

Alternatively, in the respective examples described in the present specification, like the second embodiment illustrated in Figs. 10 to 17, in each division assembling body 5, in at least parts in the axial line direction AD of the division inner cylinder member 3D (that is, at the respective axial line direction positions in at least parts in the axial line direction AD of the division inner cylinder member 3D), at the time of seeing the cross section in the direction perpendicular to the axial line direction, the outer circumference surface of the division inner cylinder member 3D may have a pair of first joining sections 311 (hereinafter, also simply referred to as "joining sections (311)"), and a first non-joining section 312 (hereinafter, also simply referred to as a "non-joining section (312)") (Figs. 10, 12, and 15).

The pair of first joining sections 311 are positioned at the end portions on both sides in the circumferential direction of the division inner cylinder member 3D, and are respectively joined to the division main body rubber member 4D. The pair of first joining sections 311 preferably extend over the entire length in the axial line direction AD of the division inner cylinder member 3D.

The first non-joining section 312 extends between the pair of first joining sections 311 in the circumferential direction, and is not joined to the division main body rubber member 4D.

Like the examples illustrated in Figs. 10 and 12, the first non-joining section 312 may be contacted with the division main body rubber member 4D. In this case, a gap G between the first non-joining section 312 and the division main body rubber member 4D is in the state of being collapsed substantially or completely.

It should be noted that in the present specification, in the relationship between the inner cylinder section 3 and the main body rubber section 4, "contacted" is not limited to the case where the inner cylinder section 3 and the main body rubber section 4 are directly contacted in the state where nothing is interposed therebetween, and also includes the case where a lubricant 6 is interposed between the inner cylinder section 3 and the main body rubber section 4 as described later (Fig. 17), but is intended to exclude the case where the member, the space, and the like other than the lubricant 6 are interposed between the inner cylinder section 3 and the main body rubber section 4.

Alternatively, the first non-joining section 312 may not be contacted with the division main body rubber member 4D, and the gap G actually forming the space may be present between the first non-joining section 312 and the division main body rubber member 4D.

In each division assembling body 5, only in the center portion in the axial line direction AD of the division inner cylinder member 3D, at the time of seeing the cross section in the direction perpendicular to the axial line direction, the outer circumference surface of the division inner cylinder member 3D preferably has the pair of first joining sections 311 and the first non-joining section 312 described above, and for example, only in the portion of the division inner cylinder member 3D along a second non-joining section 322 (Fig. 16) described later in the axil line direction AD, at the time of seeing the cross section in the direction perpendicular to the axial line direction, the outer circumference surface of the division inner cylinder member 3D preferably has the pair of first joining sections 311 and the first non-joining section 312 described above. In each division assembling body 5, at the end portions on both sides in the axial line direction AD of the division inner cylinder member 3D, at the time of seeing the cross section in the direction perpendicular to the axial line direction, the outer circumference surface of the division inner cylinder member 3D preferably has only joining sections 321 (Fig. 16) over the entire length in the circumferential direction.

As described above, in each division assembling body 5, in the case where in at least parts in the axial line direction AD of the division inner cylinder member 3D, at the time of seeing the cross section in the direction perpendicular to the axial line direction, the outer circumference surface of the division inner cylinder member 3D has the pair of first joining sections 311 on both sides in the circumferential direction, and the first non-joining section 312 therebetween (Figs. 10, 12, and 15), there are the following advantages.

First, when the division inner cylinder member 3D (further, the inner cylinder section 3) is displaced with respect to the division outer cylinder section 25D (further, the outer cylinder section 25) in the twisting direction (the direction for the case where the inner cylinder section 3 rotates in the circumferential direction with respect to the outer cylinder section 25) or the prying direction (the direction for the case where the center axial line 03 of the inner cylinder section 3 is tilted with respect to the center axial line 025 of the outer cylinder section 25), while the division inner cylinder member 3D is fixed to the division main body rubber member 4D in the pair of first joining sections 311 on both sides in the circumferential direction, the division inner cylinder member 3D can be slid on the division main body rubber member 4D in the first non-joining section 312 therebetween. For that, while the division inner cylinder member 3D is displaced in the twisting direction or the prying direction, the portions of the division main body rubber member 4D near the pair of first joining sections 311 contribute to the spring rigidity, but the portion of the division main body rubber member 4D near the first non-joining section 312 does not contribute to the spring rigidity substantially or completely. Therefore, as compared with the case if the division main body rubber member 4D is joined to the division inner cylinder member 3D over the entire surface of the division main body rubber member 4D, the area of the portion in which the division main body rubber member 4D is joined to the division inner cylinder member 3D is small, and accordingly, the rigidity in the twisting direction and the prying direction can be reduced, and further, the division inner cylinder member 3D (further, the inner cylinder section 3) easily swings in the twisting direction and the prying direction with respect to the division outer cylinder section 25D (further, the outer cylinder section 25). With this, the performance as the anti-vibration structure for the vehicle can be improved.

In addition, the presence of the first non-joining section 312 does not affect the displacement in the direction perpendicular to the axial line direction, so that the division main body rubber member 4D (further, the main body rubber section 4) can exhibit the high spring rigidity equal to or more than the conventional one when the division inner cylinder member 3D (further, the inner cylinder section 3) is displaced in the direction perpendicular to the axial line direction with respect to the division outer cylinder section 25D (further, the outer cylinder section 25). Further, the performance as the anti-vibration structure for the vehicle can be improved.

In addition, the gap G between the division main body rubber member 4D and the first non-joining section 312 of the division inner cylinder member 3D is sealed by the pair of first joining sections 311 on both sides in the circumferential direction thereof. Therefore, dust and the like can be suppressed from intruding into the gap G via the mating surfaces of the pair of division assembling bodies 5, and further, the slidability between the division main body rubber member 4D and the division inner cylinder member 3D there can be suppressed from being lowered. In addition, if as described later, the lubricant 6 is filled into the gap G (Fig. 17), the lubricant 6 can be suppressed from being leaked out via the mating surfaces of the pair of division assembling bodies 5.

In the respective examples described in the present specification, like the first embodiment illustrated in Figs. 1 to 9, in each division assembling body 5, in the entire length in the circumferential direction of the division inner cylinder member 3D, at the time of seeing the cross section in the axial line direction, the outer circumference surface of the division inner cylinder member 3D may be joined to the division main body rubber member 4D over substantially the entire length in the axial line direction thereof (Fig. 2).

Alternatively, in the respective examples described in the present specification, like the second embodiment illustrated in Figs. 10 to 17, in each division assembling body 5, in at least parts in the circumferential direction of the division inner cylinder member 3D (that is, at the respective circumferential direction positions in at least parts in the circumference direction of the division inner cylinder member 3D), at the time of seeing the cross section in the axial line direction, the outer circumference surface of the division inner cylinder member 3D may have the pair of second joining sections 321 (hereinafter, also simply referred to as the "joining sections (321)"), and the second non-joining section 322 (hereinafter, also simply referred to as the "non-joining section (322)") (Figs. 11, 16, and 17).

The pair of second joining sections 321 are positioned at the end portions on both sides in the axial line direction AD of the division inner cylinder member 3D, and are respectively joined to the division main body rubber member 4D. The pair of second joining sections 321 preferably extend over the entire length in the circumferential direction of the division inner cylinder member 3D.

The second non-joining section 322 extends between the pair of second joining sections 321 in the axial line direction, and is not joined to the division main body rubber member 4D.

Like the respective examples illustrated in Figs. 11, 16, and 17, the second non-joining section 322 may be contacted with the division main body rubber member 4D. In this case, the gap G between the second non-joining section 322 and the division main body rubber member 4D is in the state of being collapsed substantially or completely.

Alternatively, the second non-joining section 322 may not be contacted with the division main body rubber member 4D, and the gap G actually forming the space may be present between the second non-joining section 322 and the division main body rubber member 4D.

In each division assembling body 5, only in the center portion in the circumferential direction of the division inner cylinder member 3D, at the time of seeing the cross section in the axial line direction, the outer circumference surface of the division inner cylinder member 3D preferably has the pair of second joining sections 321 and the second non-joining section 322 described above, and for example, only in the portion of the division inner cylinder member 3D along the first non-joining section 312 (Fig. 15) described above in the circumferential direction, at the time of seeing the cross section in the axial line direction, the outer circumference surface of the division inner cylinder member 3D preferably has the pair of second joining sections 321 and the second non-joining section 322 described above. In each division assembling body 5, at the end portions on both sides in the circumferential direction of the division inner cylinder member 3D, at the time of seeing the cross section in the axial line direction, the outer circumference surface of the division inner cylinder member 3D preferably has only the joining sections 311 (Fig. 15) over the entire length in the axial line direction.

As described above, in each division assembling body 5, in the case where in at least parts in the circumferential direction of the division inner cylinder member 3D, at the time of seeing the cross section in the axial line direction, the outer circumference surface of the division inner cylinder member 3D has the pair of second joining sections 321 on both sides in the axial line direction, and the second non-joining section 322 therebetween (Figs. 11, 16, and 17), there are the following advantages.

First, when the division inner cylinder member 3D (further, the inner cylinder section 3) is displaced with respect to the division outer cylinder section 25D (further, the outer cylinder section 25) in the twisting direction or the prying direction, while the division inner cylinder member 3D is fixed to the division main body rubber member 4D in the pair of second joining sections 321 on both sides in the axial line direction, the division inner cylinder member 3D can be slid on the division main body rubber member 4D in the second non-joining section 322 therebetween. For that, while the division inner cylinder member 3D is displaced in the twisting direction or the prying direction, the portions of the division main body rubber member 4D near the pair of second joining sections 321 contribute to the spring rigidity, but the portion of the division main body rubber member 4D near the second non-joining section 322 does not contribute to the spring rigidity substantially or completely. Therefore, as compared with the case if the division main body rubber member 4D is joined to the division inner cylinder member 3D over the entire surface of the division main body rubber member 4D, the area of the portion in which the division main body rubber member 4D is joined to the division inner cylinder member 3D is small, and accordingly, the rigidity in the twisting direction and the prying direction can be reduced, and further, the division inner cylinder member 3D (further, the inner cylinder section 3) easily swings in the twisting direction and the prying direction with respect to the division outer cylinder section 25D (further, the outer cylinder section 25). With this, the performance as the anti-vibration structure for the vehicle can be improved.

In addition, the presence of the second non-joining section 322 does not affect the displacement in the direction perpendicular to the axial line direction, so that the division main body rubber member 4D (further, the main body rubber section 4) can exhibit the high spring rigidity equal to or more than the conventional one when the division inner cylinder member 3D (further, the inner cylinder section 3) is displaced in the direction perpendicular to the axial line direction with respect to the division outer cylinder section 25D (further, the outer cylinder section 25). Further, the performance as the anti-vibration structure for the vehicle can be improved.

In addition, the gap G between the division main body rubber member 4D and the second non-joining section 322 of the division inner cylinder member 3D is sealed by the pair of second joining sections 321 on both sides in the axial line direction thereof. Therefore, dust and the like can be suppressed from intruding into the gap G from both sides in the axial line direction, and further, the slidability between the division main body rubber member 4D and the division inner cylinder member 3D there can be suppressed from being lowered. In addition, if as described later, the lubricant 6 is filled into the gap G (Fig. 17), the lubricant 6 can be suppressed from being leaked out from both sides in the axial line direction.

It should be noted that as described above, the bush 1 of the second embodiment (Figs. 10 to 17) has the portions in which the inner cylinder section 3 can be slid with respect to the main body rubber section 4 (the first non-joining section 312, and the second non-joining section 322), and can thus be said to be a so-called "a sliding type bush".

In the bush manufacturing step, the joining sections 311 and 321 and the non-joining sections 312 and 322 are preferably formed in the vulcanization step.

One method for forming the joining sections 311 and 321 and the non-joining sections 312 and 322 in the vulcanization step is as follows. First, in the surface processing step before the vulcanization step, the portions of the outer circumference surface of the division inner cylinder member 3D, which are to be the joining sections 311 and 321 are subjected to the surface processing process by a laser and the like, and thereby, the plurality of minute concave portions are formed in the portions of the division inner cylinder member 3D. The portions of the outer circumference surface of the division inner cylinder member 3D, which are to be the non-joining sections 312 and 322 are not subjected to the surface processing process. Thereafter, in the ejection step, the unvulcanized rubber for configuring the division main body rubber member 4D is ejected into the die in which the division bracket member 2D and the division inner cylinder member 3D are set, and thereafter, in the vulcanization step, the division assembling body 5 is vulcanization molded by the die. In this case, during the vulcanization step, the division main body rubber member 4D enters into the plurality of minute concave portions in the portions of the outer circumference surface of the division inner cylinder member 3D, which have been subjected to the surface processing process, and is joined to the portions by the anchor effect, so that the joining sections 311 and 321 are formed there, and the division main body rubber member 4D is not joined to the portions of the outer circumference surface of the division inner cylinder member 3D, which have not been subjected to the surface processing process, so that the non-joining sections 312 and 322 are formed there. It should be noted that as the surface processing, ones described in, for example, Japanese Unexamined Patent Application Publication No. 2020-116862 and Patent No. 6489908 may be adopted.

Another method for forming the joining sections 311 and 321 and the non-joining sections 312 and 322 in the vulcanization step is as follows. First, in the adhesive sheet sticking step before the vulcanization step, adhesive sheets are stuck to the portions of the outer circumference surface of the division inner cylinder member 3D, which are to be the joining sections 311 and 321. At this time, the adhesive sheets are not stuck to the portions of the outer circumference surface of the division inner cylinder member 3D, which are to be the non-joining sections 312 and 322. Thereafter, in the ejection step, the unvulcanized rubber for configuring the division main body rubber member 4D is ejected into the die in which the division bracket member 2D and the division inner cylinder member 3D are set, and thereafter, in the vulcanization step, the division assembling body 5 is vulcanization molded by the die. In this case, during the vulcanization step, the division main body rubber member 4D is joined to the portions of the outer circumference surface of the division inner cylinder member 3D to which the adhesive sheets have been stuck, so that the joining sections 311 and 321 are formed there, and the division main body rubber member 4D is not joined to the portions of the outer circumference surface of the division inner cylinder member 3D to which the adhesive sheets have not been stuck, so that the non-joining sections 312 and 322 are formed there. It should be noted that as the adhesive sheet, for example, one described in Patent No. 4681634 may be adopted.

A still another method for forming the joining sections 311 and 321 and the non-joining sections 312 and 322 in the vulcanization step is as follows. First, in the adhesive coating step before the vulcanization step, masking is provided to the portions of the outer circumference surface of the division inner cylinder member 3D, which are to be the non-joining sections 312 and 322, and the adhesive is then coated to the portions of the outer circumference surface of the division inner cylinder member 3D, which are to be the joining sections 311 and 321. With this, the adhesive is not coated to the portions of the outer circumference surface of the division inner cylinder member 3D, which are to be the non-joining sections 312 and 322. Thereafter, the masking is removed. Thereafter, in the ejection step, the unvulcanized rubber for configuring the division main body rubber member 4D is ejected into the die in which the division bracket member 2D and the division inner cylinder member 3D are set, and thereafter, in the vulcanization step, the division assembling body 5 is vulcanization molded by the die. In this case, during the vulcanization step, the division main body rubber member 4D is joined to the portions of the outer circumference surface of the division inner cylinder member 3D to which the adhesive has been coated, so that the joining sections 311 and 321 are formed there, and the division main body rubber member 4D is not joined to the portions of the outer circumference surface of the division inner cylinder member 3D to which the masking has been provided (that is, the adhesive has not been coated), so that the non-joining sections 312 and 322 are formed there.

However, as the method for forming the joining sections 311 and 321 and the non-joining sections 312 and 322, a method other than the above methods may be used.

As illustrated in Fig. 17, the lubricant 6 may be interposed between the division main body rubber member 4D and the non-joining sections 312 and 322 of the division inner cylinder member 3D. In this case, the lubricant 6 is filled in the gap G between the division main body rubber member 4D and the non-joining sections 312 and 322 of the division inner cylinder member 3D.

It should be noted that in Fig. 17, the gap G is exaggeratedly illustrated, but actually, the gap G can be in the state of being collapsed substantially or completely. For that, the layer thickness of the lubricant 6 can also be actually very thin. In this case, the division main body rubber member 4D and the non-joining sections 312 and 322 of the division inner cylinder member 3D are contacted with each other via the lubricant 6.

The lubricant 6 is made of, for example, a lubricating oil.

The lubricant 6 is interposed between the division main body rubber member 4D and the non-joining sections 312 and 322 of the division inner cylinder member 3D, so that the wear resistance between the division main body rubber member 4D and the non-joining sections 312 and 322 of the division inner cylinder member 3D can be reduced, and further, the non-joining sections 312 and 322 of the division inner cylinder member 3D are easily slid with respect to the division main body rubber member 4D. Therefore, the inner cylinder section 3 is slid in the twisting direction and the prying direction more easily.

However, as illustrated in Figs. 15 and 16, the lubricant 6 may not be interposed between the division main body rubber member 4D and the non-joining sections 312 and 322 of the division inner cylinder member 3D.

When the lubricant 6 is interposed between the non-joining sections 312 and 322 of the division inner cylinder member 3D and the division main body rubber member 4D (Fig. 17), a lubricant injection step is preferably performed after the vulcanization step in the bush manufacturing step.

When the lubricant injection step is performed, an injection hole H is previously formed in each division assembling body 5 of the bush 1. The injection hole H communicates the gap G between the non-joining sections 312 and 322 of the division inner cylinder member 3D and the division main body rubber member 4D and the outside of the division assembling body 5. Like the example of Fig. 17, the injection hole H may pass through the division outer cylinder section 25D and the division main body rubber member 4D of the division assembling body 5 between the gap G and the outside of the division assembling body 5. In this case, a method for previously forming the injection hole H may be arbitrary, but given is, for example, a method in which previously, a throughhole is formed in the corresponding portion of the division outer cylinder section 25D, and a protrusion for forming the injection hole H is provided in the die used during the ejection step and the vulcanization step.

In the lubricant injection step, the lubricant 6 is injected from the outside via the injection hole H into the gap G between the non-joining sections 312 and 322 of the division inner cylinder member 3D and the division main body rubber member 4D.

In the bush manufacturing step, when the lubricant injection step is performed as described above, a cap insertion step may be performed after the lubricant injection step.

When the cap insertion step is performed, as illustrated in Fig. 17, a cap P is inserted into the injection hole H from the outside of the division assembling body 5, thereby closing the insertion hole H. With this, the lubricant 6 can be prevented from being leaked out to the outside.

In the respective examples described in the present specification, like the second embodiment illustrated in Figs. 10 to 17, in each division assembling body 5, in at least parts in the circumferential direction of the division inner cylinder member 3D (that is, at the respective circumferential direction positions in at least parts in the circumferential direction of the division inner cylinder member 3D), at the time of seeing the cross section in the axial line direction (Fig. 16), the outer circumference surface of the division inner cylinder member 3D may have first protrusion sections 33 (protrusion sections) protruding toward the outer circumference side in the center portion in the axial line direction of the division inner cylinder member 3D. In this case, the portions of the inner circumference surface of the division main body rubber member 4D, which come into contact with the first protrusion sections 33 of the division inner cylinder member 3D form concave shapes recessed to the outer circumference side so as to be adapted to the first protrusion sections 33.

When the outer circumference surface of the division inner cylinder member 3D has the first protrusion sections 33 (Fig. 16), as compared with the case where the outer circumference surface of the division inner cylinder member 3D does not have the first protrusion sections 33 (for example, see Figs. 4 and 5), the thickness of the division main body rubber member 4D positioned on the outer circumference sides of the first protrusion sections 33 becomes small, so that accordingly, the division main body rubber member 4D can exhibit the higher spring rigidity with respect to the relative displacement in the direction perpendicular to the axial line direction of the division inner cylinder member 3D.

In addition, when the outer circumference surface of the division inner cylinder member 3D has the first protrusion sections 33 (Fig. 16), unlike the case where the outer circumference surface of the division inner cylinder member 3D does not have the first protrusion sections 33 (for example, see Figs. 4 and 5), the side surfaces on both sides in the axial line direction of the first protrusion sections 33 are present, so that accordingly, the durability can be improved, the displacement in the axial line direction of the division inner cylinder member 3D is easily suppressed, and further, the movement in the axial line direction of the rod-like member R can be suppressed.

In each division assembling body 5, in the at least parts in the circumferential direction of the division inner cylinder member 3D, at the time of seeing the cross section in the axial line direction (Fig. 16), the outer circumference surface of the division inner cylinder member 3D may extend in the substantially straight line shape along the axial line direction on both sides in the axial line direction AD with respect to the first protrusion sections 33.

In each division assembling body 5, only in the center portion in the circumferential direction of the division inner cylinder member 3D, at the time of seeing the cross section in the axial line direction, the outer circumference surface of the division inner cylinder member 3D may have the first protrusion sections 33 in the center portion in the axial line direction of the division inner cylinder member 3D, and for example, only in the portion of the division inner cylinder member 3D along the first non-joining section 312 (Fig. 15) in the circumferential direction, at the time of seeing the cross section in the axial line direction, the outer circumference surface of the division inner cylinder member 3D may have the first protrusion sections 33 in the center portion in the axial line direction of the division inner cylinder member 3D. In each division assembling body 5, at the end portions on both sides in the circumferential direction of the division inner cylinder member 3D, at the time of seeing the cross section in the axial line direction, the outer circumference surface of the division inner cylinder member 3D may not have the first protrusion sections 33, and may extend in the substantially straight line shape along the axial line direction over the entire length in the axial line direction.

In each division assembling body 5, like the example of Fig. 16, at the time of seeing the cross section in the axial line direction, preferably, the pair of second joining sections 321 configure at least parts of the portions of the outer circumference surface of the division inner cylinder member 3D on both sides in the axial line direction AD with respect to the first protrusion sections 33, and the second non-joining section 322 configures at least parts (preferably, all) of the first protrusion sections 33 of the division inner cylinder member 3D.

In this case, when the division inner cylinder member 3D is displaced in the prying direction, the second non-joining section 322 configured to include the first protrusion sections 33 of the division inner cylinder member 3D is slid with respect to the division main body rubber member 4D more easily. Therefore, the spring rigidity with respect to the displacement in the prying direction can be further reduced.

In each division assembling body 5, the protrusion shape formed by each of the first protrusion sections 33 at the time of seeing the cross section in the axial line direction may be any shape as long as the protrusion shape formed by the first protrusion section 33 at the time of seeing the cross section in the axial line direction is a shape protruding to the outer circumference side.

As illustrated in Fig. 16, in each division assembling body 5, at the time of seeing the cross section in the axial line direction, the first protrusion sections 33 may have a recessed section 33a recessed to the inner circumference side on the protrusion end surface to the outer circumference side thereof. The depth in the radial direction of the recessed section 33a is smaller than the height in the radial direction of each of the first protrusion sections 33. In this case, the portion of the inner circumference surface of the division main body rubber member 4D, which comes into contact with the recessed section 33a of the first protrusion sections 33 of the division inner cylinder member 3D forms a convex shape protruding to the inner circumference side so as to be adapted to the recessed section 33a. By such the configuration, the displacement in the axial line direction of the division inner cylinder member 3D is suppressed more easily, and further, the movement in the axial line direction of the rod-like member R can be further suppressed.

In this case, as illustrated in Fig. 16, in each division assembling body 5, at the time of seeing the cross section in the axial line direction, the inner circumference surface of the division outer cylinder section 25D may have a protrusion section 25a protruding to the inner circumference side toward the recessed section 33a on the outer circumference side of the recessed section 33a of the first protrusion sections 33 of the division inner cylinder member 3D. By such the configuration, the displacement in the axial line direction of the division inner cylinder member 3D is suppressed more easily, and further, the movement in the axial line direction of the rod-like member R can be further suppressed.

In the respective examples described in the present specification, like the second embodiment illustrated in Figs. 10 to 17, in each division assembling body 5, in at least parts in the axial line direction of the division inner cylinder member 3D (that is, at the respective axial line direction positions in at least parts in the axial line direction AD of the division inner cylinder member 3D), at the time of seeing the cross section in the direction perpendicular to the axial line direction (Fig. 15), the outer circumference surface of the division inner cylinder member 3D may have second protrusion sections 34 (protrusion sections) protruding toward the outer circumference side in the center portion in the circumferential direction of the division inner cylinder member 3D. In this case, the portions of the inner circumference surface of the division main body rubber member 4D, which come into contact with the second protrusion sections 34 of the division inner cylinder member 3D form concave shapes recessed to the outer circumference side so as to be adapted to the second protrusion sections 34.

When the outer circumference surface of the division inner cylinder member 3D has the second protrusion sections 34 (Fig. 15), as compared with the case where the outer circumference surface of the division inner cylinder member 3D does not have the second protrusion sections 34 (for example, see Fig. 6), the thickness of the division main body rubber member 4D positioned on the outer circumference sides of the second protrusion sections 34 becomes small, so that accordingly, the division main body rubber member 4D can exhibit the higher spring rigidity with respect to the relative displacement in the direction perpendicular to the axial line direction of the division inner cylinder member 3D.

In each division assembling body 5, in the at least parts in the circumferential direction of the division inner cylinder member 3D, at the time of seeing the cross section in the direction perpendicular to the axial line direction (Fig. 16), the outer circumference surface of the division inner cylinder member 3D may extend along the circumferential direction on both sides in the circumferential direction with respect to the second protrusion sections 34.

In each division assembling body 5, only in the center portion in the circumferential direction of the division inner cylinder member 3D, at the time of seeing the cross section in the direction perpendicular to the axial line direction, the outer circumference surface of the division inner cylinder member 3D may have the second protrusion sections 34 in the center portion in the axial line direction of the division inner cylinder member 3D, and for example, only in the portion of the division inner cylinder member 3D along the second non-joining section 322 (Fig. 16) in the axial line direction, at the time of seeing the cross section in the direction perpendicular to the axial line direction, the outer circumference surface of the division inner cylinder member 3D may have the second protrusion sections 34 in the center portion in the axial line direction of the division inner cylinder member 3D. In each division assembling body 5, at the end portions on both sides in the axial line direction of the division inner cylinder member 3D, at the time of seeing the cross section in the direction perpendicular to the axial line direction, the outer circumference surface of the division inner cylinder member 3D may not have the second protrusion sections 34, and may extend along the circumferential direction over the entire length in the circumferential direction.

In each division assembling body 5, like the example of Fig. 15, at the time of seeing the cross section in the direction perpendicular to the axial line direction, preferably, the pair of joining sections 311 configure at least parts of the portions of the outer circumference surface of the division inner cylinder member 3D on both sides in the circumferential direction with respect to the second protrusion sections 34, and the non-joining section 312 configures at least parts (preferably, all) of the second protrusion sections 34 of the division inner cylinder member 3D.

In this case, when the division inner cylinder member 3D is displaced in the prying direction, the non-joining section 312 configured to include the second protrusion sections 34 of the division inner cylinder member 3D is slid with respect to the division main body rubber member 4D more easily. Therefore, the spring rigidity with respect to the displacement in the prying direction can be further reduced.

### Industrial Applicability

A bush, an anti-vibration structure, and an anti-vibration structure manufacturing method according to the present invention are preferably used for the coupling portion between a rod-like member of a vehicle (for example, the torsion bar, in particular, the stabilizer bar, of the vehicle) and a vibration reception member (for example, a part of a vehicle body).

### List of Reference Signs

S: Vibration isolation structure
1: Bush
2: Bracket section
2D: Division bracket member
2D1: First division bracket member
2D1a: Leg section (fitting section)
2D1b: Mounting section
2D1h: Fastening hole
2D1c: Accommodation concave section
2D2: Second division bracket member
2D2a: Leg section (fitting section)
25: Outer cylinder section
25D: Division outer cylinder section
25D1: First division outer cylinder section
25D2: Second division outer cylinder section
25a: Protrusion section
3: Inner cylinder section
3D: Division inner cylinder member
3D1: First division inner cylinder member
3D2: Second division inner cylinder member
311: First joining section (joining section)
312: First non-joining section (non-joining section)
321: Second joining section (joining section)
322: Second non-joining section (non-joining section)
33: First protrusion section (protrusion section)
33a: Recessed section
34: Second protrusion section (protrusion section)
4: Main body rubber section
4D: Division main body rubber member
4D1: First division main body rubber member
4D2: Second division main body rubber member
5: Division assembling body
51: First division assembling body
52: Second division assembling body
6: Lubricant
G: Gap
H: Injection hole
P: Cap
F: Fastening tool
025: Center axial line of outer cylinder section (center axial line of division outer cylinder section)
03: Center axial line of inner cylinder section (center axial line of division inner cylinder member, center axial line of bush, and center axial line of anti-vibration structure)
R: Rod-like member
RG: Rough surface section
AD: Axial line direction
VD: Vertical direction
VD1: Vertical direction first side
VD2: Vertical direction second side
WD: Width direction
K: Coil
VB: Vibration reception member

## Claims

1. A bush comprising:
a bracket section having an outer cylinder section;,
an inner cylinder section; and
a main body rubber section that couples the outer cylinder section and the inner cylinder section to each other, wherein
the inner cylinder section is configured of a thermoplastic resin.

2. The bush according to claim 1, wherein
the bush includes a pair of division assembling bodies, and
each of the respective division assembling bodies includes:
a division bracket member that configures a part of the bracket section and has a division outer cylinder section configuring a part in the circumferential direction of the outer cylinder section;
a division inner cylinder member configuring a part in the circumferential direction of the inner cylinder section; and
a division main body rubber member that configures a part in the circumferential direction of the main body rubber section and couples the division outer cylinder section of the division bracket member and the division inner cylinder member.

3. The bush according to claim 1, wherein the inner cylinder section is welded to a rod-like member that extends on the inner circumference side of the inner cylinder section.

4. An anti-vibration structure comprising:
the bush according to claim 1; and
a rod-like member that extends on the inner circumference side of the inner cylinder section of the bush, wherein
the inner cylinder section is welded to the rod-like member.

5. The anti-vibration structure according to claim 4, wherein
the outer circumference surface of the rod-like member has a rough surface section having a plurality of concave portions, and
the inner cylinder section is welded to the rough surface section of the rod-like member.

6. An anti-vibration structure manufacturing method for manufacturing the anti-vibration structure according to claim 4, comprising:
a bush manufacturing step for manufacturing the bush, and
a rod-like member joining step for joining the inner cylinder section to the rod-like member by welding in the state where the rod-like member is extended to the inner circumference side of the inner cylinder section of the bush.

7. The anti-vibration structure manufacturing method according to claim 6, wherein
in the rod-like member joining step, the rod-like member is heated by electromagnetic induction heating in the state where coils are disposed on the outer circumference side of the rod-like member, so that the inner circumference surface of the inner cylinder section is melted to be welded to the rod-like member.
